# EUROPEAN PATENT APPLICATION

(11) **EP 1 815 933 A2**
(43) Date of publication of application: **08.08.2007**
(21) Application number: 07250277.6
(22) Date of filing: 23.01.2007
(51) Int. Cl.: B23H 7/36, B23H 1/10

(54) **Machining liquid processing apparatus in wire electric discharge machine**

(30) Priority: 01.02.2006 JP 2006024869
(71) Applicant: FANUC LTD, Minamitsuru-gun, Yamanashi 401-0597 (JP)
(72) Inventor: Kita, Yuki, Room 10-203, Minamitsuru-gun Yamanashi, 401-0511 (JP); Nishikawa, Ryou , Fanuc, Minamitsuru-gun Yamanashi, 401-0511 (JP)
(74) Representative: Billington, Lawrence Emlyn

(57) **Abstract**

A temperature sensor for detecting a machining liquid temperature in a machining tank is provided. A machining liquid cooling device (6) controls machining liquid in a clean water tank (4) based on the temperature detected by the temperature sensor (S1) and returns the machining liquid to the clean water tank (4). The machining liquid in the clean water tank is supplied to the machining tank and wire guides through pumps (P1,P2). Because the machining liquid temperature in the clean water tank is controlled based on the machining liquid temperature in the machining tank, it is possible to maintain the machining liquid in the machining tank substantially at a target temperature, even though the machining liquid is supplied after being heated by the pumps.

## Description

### BACKGROUND OF THE INVENTION

### 1. Field of the Invention

The present invention relates to improvement of a machining liquid processing apparatus provided to a wire electric discharge machine and for controlling a temperature of machining liquid.

### 2. Description of the Related Art

A wire electric discharge machine is for machining a workpiece (object to be machined) by applying a voltage between a wire electrode and the workpiece to generate electric discharge. In order to remove machining chips produced by insulation, cooling, and electric discharge between the wire electrode and the workpiece, the machining liquid is interposed between the wire electrode and the workpiece. The machining liquid is heated and a temperature of the machining liquid is raised by the electric discharge between the wire electrode and the workpiece. Moreover, due to heat loss of a pump for supplying the machining liquid to a machining tank or the like in which the workpiece is disposed, the temperature rises.

As a result of deformation cause by thermal expansion of the workpiece and a table or the like on which the workpiece is placed due to the temperature rise of the machining liquid, machining accuracy reduces and the wire electrode is broken. In order to cope with this problem, the wire electric discharge machine includes a cooling device for cooling the machining liquid.

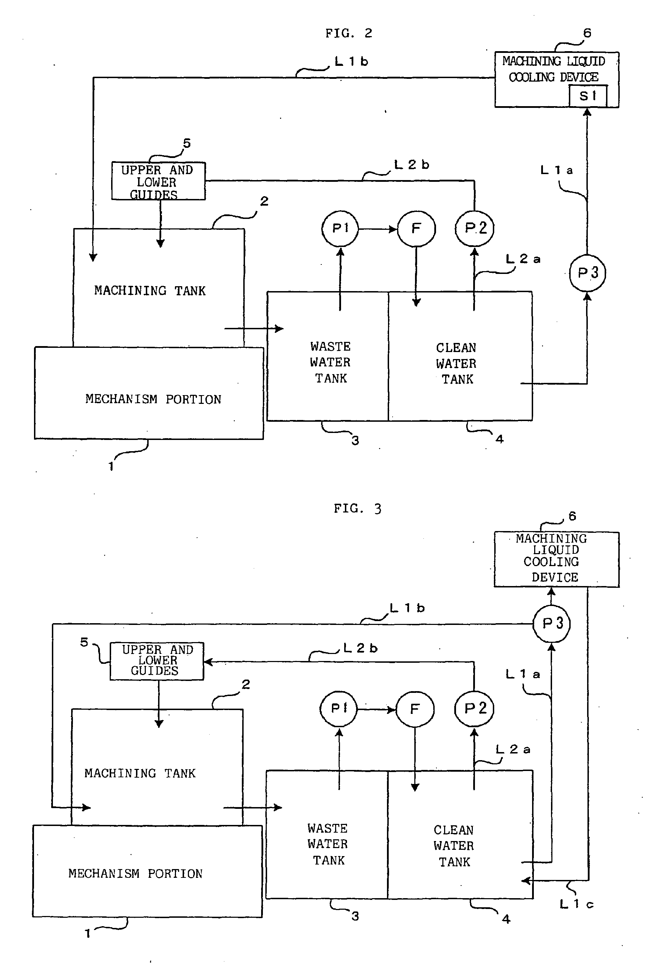

FIG. 2 is a schematic drawing of a prior-art machining liquid processing apparatus employed in a wire electric discharge machine and for controlling a temperature of machining liquid.

In FIG. 2, reference numeral 1 denotes a mechanism portion of a wire electric discharge machine, a table (not shown) on which a workpiece is placed is disposed in a machining tank 2 disposed on the mechanism portion 1, and a wire electrode (not shown) travels in the machining tank 2. The table is driven by a feed servomotor or the like provided to the mechanism portion 1 and a voltage is applied between the wire electrode and the workpiece to generate electric discharge to thereby carry out electric discharge machining. Machining liquid is stored in the machining tank 2 and is heated and warmed by the electric discharge. The machining liquid including machining chips flows out of the machining tank 2 and is collected and stored in a waste water tank 3. The machining liquid in the waste water tank 3 is drawn up by a filter pump P1, filtered by a filter F, and then supplied into and stored in a clean water tank 4.

The machining liquid in the clean water tank 4 is drawn up by a circulation pump P3 and introduced into a machining liquid cooling device 6 through a machining liquid supply path L1a. The machining liquid cooling device 6 carries out temperature control based on a temperature detected by a temperature sensor S1 for detecting the temperature of the machining liquid from the clean water tank 4 to cool the machining liquid to a predetermined temperature. The cooled machining liquid is supplied to the machining tank 2 through a machining liquid supply path L1b.

Moreover, the machining liquid in the clean water tank 4 is drawn up by a jet pump P2 through a machining liquid supply path L2a and supplied to upper and lower wire guides 5 through a machining liquid supply path L2b. In this way, the machining liquid is jetted toward a gap between the wire electrode and the workpiece from nozzles provided to the wire guides 5.

The machining liquid is circulated and used as described above. Into the machining tank 2, the machining liquid cooled by the machining liquid cooling device 6 is supplied and also the relatively high-temperature machining liquid of the clean water tank 4 and not subjected to cooling treatment is supplied from the upper and lower wire guides 5. In other words, there is a temperature difference between the machining liquids supplied into the machining tank 2. As a result, thermal deformation of the table and the workpiece occurs. If the machining liquid cooling device 6 is of an on/off control type, contraction due to the thermal deformation is large. Although this has a small influence in a case of an inverter-type cooling device, the thermal deformation of the table and the workpiece and the contraction due to the thermal deformation affect machining accuracy.

There is also a known machining liquid processing apparatus in which machining liquid in a clean water tank is maintained at a predetermined temperature and the machining liquid in the clean water tank is supplied into a machining tank and is also jetted into a gap between a wire electrode and a workpiece through upper and lower wire guides (see Japanese Patent Application Laid-Open No. 8-174339). FIG. 3 is a schematic drawing of the machining liquid processing apparatus described in Japanese Patent Application Laid-Open No. 8-174339.

The machining liquid flowing out of the machining tank 2 is collected and stored in a waste water tank 3. The machining liquid in the waste water tank 3 is drawn up by a filter pump P1, filtered by a filter F, and lead into the clean water tank 4. The machining liquid stored in the clean water tank 4 is drawn up by a circulation pump P3 through a machining liquid supply path L1a and is lead to a machining liquid cooling device 6 through one of branch discharge ports of the pump P3. The machining liquid cooling device 6 controls the machining liquid to a predetermined temperature and returns the machining liquid into the clean water tank 4 through a machining liquid return path L1c.

From the other branch discharge port of the circulation pump P3, the machining liquid is supplied into the machining tank 2 through the machining liquid supply path L1b. Moreover, the machining liquid drawn up from the clean water tank 4 by a jet pump through a machining liquid supply path L2a is supplied to the upper and lower wire guides 5 through a machining liquid supply path L2b and is jetted toward the gap between the wire electrode and the workpiece.

In the machining liquid processing apparatus described in Japanese Patent Application Laid-Open No. 8-174339, the machining liquid stored in the clean water tank 4 is sent into the machining liquid cooling device 6 and controlled to the predetermined temperature there. However, the machining liquid is supplied to the machining tank 2 and the upper and lower wire guides 5 (gap between the wire electrode and the workpiece) through the circulation pump P3 and the jet pump P2, respectively, and therefore the machining liquid is heated and the temperature of the machining liquid rises due to heat loss of the pumps P3 and P2. Therefore, the machining liquid the temperature of which is not controlled is supplied into the machining tank 2 and the gap between the wire electrode and the workpiece. In other words, in FIG. 3, the machining liquid supplied into the machining tank 2 through the machining liquid supply path L1b has been heated and the temperature of the machining liquid has been raised by the circulation pump P3, having not undergone temperature control. Moreover, the machining liquid supplied to the upper and lower wire guides 5 through the machining liquid supply path L2b has been heated and the temperature of the machining liquid has been raised by the jet pump P2, having not undergone temperature control. As a result, the temperature of the machining liquid in the machining tank 2 rises and also becomes nonuniform.

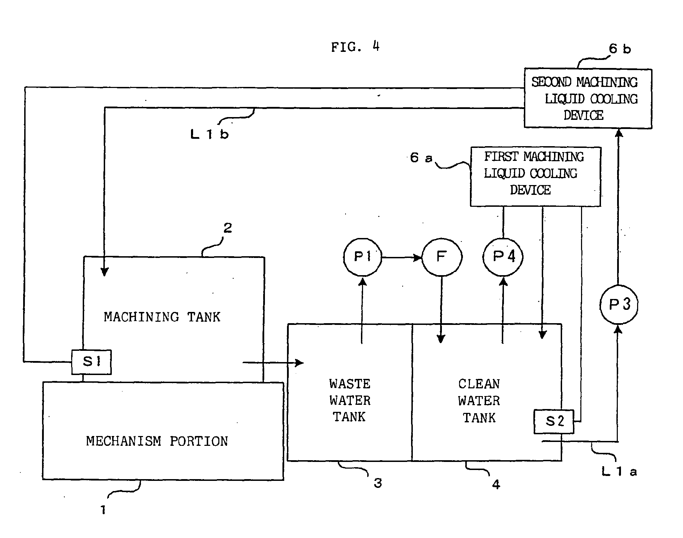

There is also another known machining liquid processing apparatus for controlling a temperature of the machining liquid as shown in FIG. 4. Machining liquid in a machining tank 2 flows into and is stored in a waste water tank 3. The machining liquid in the waste water tank 3 is drawn up by a filter pump P1, filtered by a filter F, and is then supplied into a clean water tank 4. The machining liquid stored in the clean water tank 4 is drawn up into a first machining liquid cooling device 6a by a pump P4. The first machining liquid cooling device 6a controls the temperature of the machining liquid based on a temperature detected by a sensor S2 for detecting the temperature of the machining liquid in the clean water tank 4 and returns the machining liquid into the clean water tank 4. In this way, the temperature of the machining liquid in the clean water tank 4 is controlled.

Moreover, the machining liquid stored in the clean water tank 4 is drawn up to into a second machining liquid cooling device 6b by a circulation pump P3. The second machining liquid cooling device 6b controls the temperature of the machining liquid based on the detected temperature from a temperature sensor S1 for detecting the temperature of the machining liquid in the machining tank 2 and supplies the machining liquid to the machining tank 2 (see Japanese Patent Application Laid-Open No. 2-95519, Japanese Patent Application Laid-Open No. 2005-335027).

In the machining liquid processing apparatus shown in FIG. 2 out of the above-described prior-art machining liquid processing apparatuses, the temperature of the machining liquid in the machining tank 2 is not controlled and the cooled machining liquid is directly supplied into the machining tank 2 and also the machining liquid which has not been cooled is supplied into the machining tank 2 from the upper and lower wire guides 5. Therefore, the temperature of the machining liquid in the machining tank 2 is unstable and nonuniform, which promotes contraction of the table and work in the machining tank 2 due to thermal deformation to thereby reduce the machining accuracy or cause a break in the wire electrode.

In the prior-art machining liquid processing apparatus shown in FIG. 3, the cooled machining liquid at the controlled temperature in the clean water tank 4 is supplied into the machining tank 2 and to between the wire electrode and the workpiece through upper and lower wire guides 5 by the circulation pump P3 and the jet pump P2. Because the machining liquid which has been heated and the temperature of which has been raised by the heat loss of the circulation pump P3 or the jet pump P2 is supplied into the machining tank 2, the temperature of the machining liquid in the machining tank 2 rises and it is impossible to obtain a uniform and constant temperature.

Furthermore, in the prior-art machining liquid processing apparatus shown in FIG. 4, two machining liquid cooling devices are required and the whole apparatus becomes expensive.

### SUMMARY OF THE INVENTION

The present invention relates to a machining liquid processing apparatus in a wire electric discharge machine. The wire electric discharge machine includes: a machining tank having in itself an electric discharge machining portion for carrying out electric discharge machining of an object to be machined by using a wire electrode; a waste water tank for collecting and storing the machining liquid in the machining tank; a clean water tank for storing the machining liquid from the waste water tank and filtered by a filter; a machining liquid supply path for supplying the machining liquid in the clean water tank into the machining tank; and a supply path for supplying the machining liquid in the clean water tank to upper and lower wire guides. The machining liquid processing apparatus includes a machining liquid cooling device for cooling the machining liquid in the clean water tank and supplying the machining liquid into the clean water tank; and a temperature detecting means provided to the machining tank. The machining liquid cooling device controls a temperature in the clean water tank based on a machining liquid temperature in the machining tank and detected by the temperature detecting means to thereby suppress fluctuations in the machining liquid temperature in the machining tank and make the temperature uniform.

With the invention, there is provided the machining liquid processing apparatus in the wire electric discharge machine, the apparatus capable of being structured at low cost, suppressing the fluctuations in the machining liquid temperature in the machining tank, and maintaining the temperature uniform. Because the machining liquid temperature in the machining tank is maintained substantially at a predetermined value and uniform, it is possible to suppress thermal deformation of the object to be machined and the table mounted with the object to be machined and caused by the fluctuations in the temperature of the machining liquid to thereby enhance machining accuracy and suppress a break in the wire electrode.

### BRIEF DESCRIPTION OF THE DRAWINGS

The above and other objects and features of the present invention will become apparent from the following description of the embodiments with reference to the accompanying drawings wherein:
FIG. 1 is a schematic block diagram of an embodiment of a machining liquid processing apparatus according to the invention;
FIG. 2 is a schematic block diagram of a first example of a prior-art machining liquid processing apparatus;
FIG. 3 is a schematic block diagram of a second example of the prior-art machining liquid processing apparatus;
FIG. 4 is a schematic block diagram of a third example of the prior-art machining liquid processing apparatus.

### DETAILED DESCRIPTION OF THE PREFERRED EMBODIMENTS

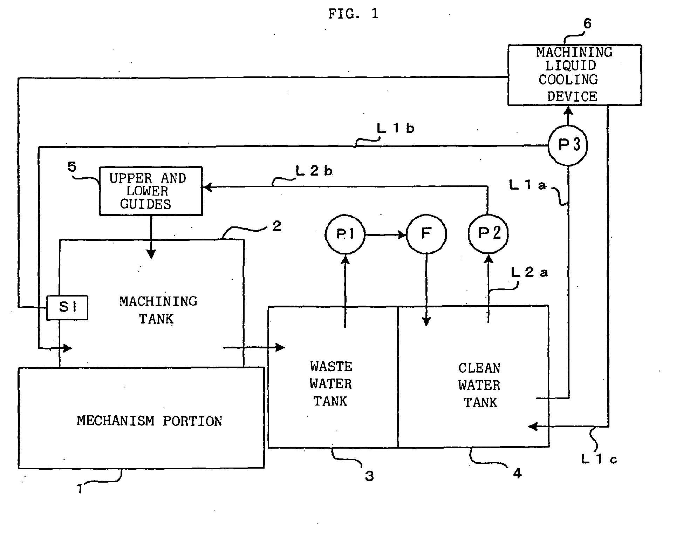

FIG. 1 is a schematic block diagram of a machining liquid processing apparatus of an embodiment of the present invention. Components similar to those of the prior-art machining liquid processing apparatuses are provided with similar reference numerals.

Similarly to the prior-art machining liquid processing apparatuses, a machining tank 2 is provided to a mechanism portion 1 of a wire electric discharge machine and an electric discharge machining portion is installed in the machining tank 2. In other words, a workpiece (object to be machined) is mounted onto a table provided to the mechanism portion 1 and a wire electrode (not shown) is moved with respect to the workpiece while applying a voltage between the workpiece and the wire electrode to generate electric discharge to thereby carry out electric discharge machining of the workpiece.

In the machining tank 2, the machining liquid is supplied and stored. The machining liquid in the machining tank 2 includes machining chips and the like produced by the electric discharge and the machining liquid flows out into a waste water tank 3.

The machining liquid collected and stored in the waste water tank 3 is drawn up by a filter pump P1, filtered by a filter F to remove the machining chips and the like, and supplied into a clean water tank 4.

The machining liquid stored in the clean water tank 4 is drawn up by a circulation pump P3 through a machining liquid supply path L1a and branches into discharge ports of the pump P3. From one of the branch discharge ports, the machining liquid is supplied to the machining tank 2 through the machining liquid supply path L1b. From the other, the machining liquid is supplied to a machining liquid cooling device 6, controlled by cooling, and returned to the clean water tank 4 through a machining liquid return path L1c.

The machining tank 2 has a temperature sensor S1 for detecting a temperature of the machining liquid in the machining tank 2. The temperature of the machining liquid detected by the temperature sensor S1 is input to the machining liquid cooling device 6. The machining liquid cooling device 6 controls the temperature of the machining liquid to a predetermined temperature based on the temperature of machining liquid detected by this temperature sensor S1 and returns the machining liquid to the clean water tank 4 through the machining liquid return path L1c.

On the other hand, the machining liquid stored in the clean water tank 4 is drawn up by a jet pump P2 through a machining liquid supply path L2a and supplied to upper and lower wire guides 5 through a machining liquid supply path L2b. As the machining liquid is jetted toward a gap between the wire electrode and the workpiece from nozzles provided to the wire guides 5 to cool the gap in this way, the machining chips produced by the electric discharge are removed from the gap.

As described above, in the present embodiment, because the temperature of the machining liquid in the clean water tank 4 is controlled by the machining liquid cooling device 6 based on the temperature of the machining liquid in the machining tank 2 detected by the temperature sensor S1, the machining liquid in the clean water tank 4 is maintained at the predetermined temperature. The machining liquid in the clean water tank 4, which has undergone temperature control, is supplied by the circulation pump P3 and the jet pump P2 into the machining tank 2 directly or through the upper and lower wire guides 5.

The machining liquid directly supplied from the clean water tank 4 into the machining tank 2 and the machining liquid supplied from the clean water tank 4 into the machining tank 2 through the upper and lower wire guides 5 are heated and their temperatures are raised by heat loss of the circulation pump P3 and the jet pump P2, respectively. However, because the machining liquid in the clean water tank 4, which has been controlled to the same temperature, is supplied by the circulation pump P3 or the jet pump P2, the temperature of the machining liquid directly supplied from the clean water tank 4 into the machining tank 2 and the temperature of the machining liquid supplied from the clean water tank 4 into the machining tank 2 through the upper and lower wire guides 5 are substantially the same and no significant temperature difference arises and therefore the machining liquid in the machining tank 2 is maintained at the substantially uniform and constant temperature. However, as described above, the temperature of the machining liquid charged into the machining tank 2 rises by a temperature corresponding to heating by the circulation pump P3 or the jet pump P2 and therefore the machining liquid cooling device 6 needs to control the temperature of the machining liquid in the clean water tank 4 to a temperature lower than a target temperature of the machining liquid in the machining tank 2 by the temperature rise due to the circulation pump P3 and the jet pump P2.

A target controlled temperature of the machining liquid temperature in the clean water tank 4 by the machining liquid cooling device 6 is set to a temperature lower than the target machining liquid temperature in the machining tank 2 by the temperature rise due to the circulation pump P3 and the jet pump P2. Then, by using a temperature lower than the machining liquid temperature detected by the temperature sensor S1 by the temperature rise due to the circulation pump P3 and the jet pump P2 as a detected temperature, the machining liquid cooling device 6 carries out the control so that the detected temperature agrees with the target temperature. As a result, the machining liquid stored in the clean water tank 4 is controlled and maintained at the temperature lower than the target temperature of the machining liquid in the machining tank 2 by the temperature rise due to the circulation pump P3 and the jet pump P2. Then, the machining liquid in the clean water tank 4 is heated by the circulation pump P3 and the jet pump P2 to the target temperature of the machining liquid in the machining tank 2 and is supplied to the machining tank 2.

## Claims

1. A machining liquid processing apparatus in a wire electric discharge machine,
the wire electric discharge machine including:
a machining tank having in itself an electric discharge machining portion for carrying out electric discharge machining of an object to be machined by using a wire electrode;
a waste water tank for collecting and storing the machining liquid in the machining tank;
a clean water tank for storing the machining liquid from the waste water tank and filtered by a filter;
a machining liquid supply path for supplying the machining liquid in the clean water tank into the machining tank; and
a supply path for supplying the machining liquid in the clean water tank to upper and lower wire guides;
the machining liquid processing apparatus including
a machining liquid cooling device for cooling the machining liquid in the clean water tank and supplying the machining liquid into the clean water tank and
a temperature detecting means provided to the machining tank,
wherein the machining liquid cooling device controls a temperature in the clean water tank based on a machining liquid temperature in the machining tank and detected by the temperature detecting means.
